# EUROPEAN PATENT SPECIFICATION

(11) **EP 1 676 629 B1**
(45) Date of publication and mention of the grant of the patent: **25.06.2008**
(21) Application number: 05106652.0
(22) Date of filing: 20.07.2005
(51) Int. Cl.: B01F 7/30, A21C 1/02, A21C 1/14

(54) **Kneading machine having planetary gear for processing of food products**
Knetmaschine mit Planetengetriebe zur Verarbeitung von Lebensmitteln
Malaxeur d'engrenages planétaires pour le traitement des produits alimentaires

(30) Priority: 21.12.2004 IT 4000892
(43) Date of publication of application: 05.07.2006
(73) Proprietor: SANCASSIANO S.p.A., I-12060 Roddi d'Alba (Cuneo) (IT)
(72) Inventor: Drocco, Davide, 12051 Alba (Cuneo) (IT)
(74) Representative: Notaro, Giancarlo

(56) References cited:
- EP-A- 0 265 587
- EP-A- 0 565 894
- DE-A1- 4 118 794
- DE-A1- 10 012 072
- DE-C- 572 800
- GB-A- 2 015 362
- GB-A- 2 025 778
- GB-A- 2 355 415
- US-A- 4 132 484

## Description

The present invention relates to planetary kneading machines for foodstuffs, of the type comprising a tank, one or more kneading implements that can turn about respective vertical axes, which are set at a distance from a central vertical axis of the tank, a planetary structure for supporting the kneading implements, on which each implement is mounted so that it can turn about its own axis, said planetary structure being in turn mounted so that it can turn about the central axis of the tank with respect to a structure for supporting the machine, first means for governing rotation of the planetary structure about the central axis of the tank, and second means for governing rotation of each kneading implement about its own axis with respect to the planetary structure.

Planetary kneading machines of the type referred to above have been known and used for some time. The present applicant has produced and marketed for some time a planetary kneading machine having all the aforesaid characteristics, in which the aforesaid first means and the aforesaid second means for governing rotation of the planetary structure and rotation of the kneading implements generally comprise a single electric motor the output shaft of which causes the aforesaid rotations by means of a gear transmission for example of an epicyclic type. The gears of said transmission call for an adequate -lubrication and are consequently immersed in an oil bath within a chamber, set above the kneading tank, which is equipped with seals for the purpose of preventing possible leakages of lubricating oil from the top part of the machine in the direction of the kneading tank.

A kneading machine of the type indicated in the preamble of claim 1 is known from GB-A-2 355 415.

The purpose of the present invention is to provide a planetary kneading machine of the type referred to above in which the risk of a contamination of the bottom part of the machine, which is to receive the foodstuff, with lubricating oil is eliminated at the root.

With a view to achieving said purpose, the subject of the invention is a planetary kneading machine that presents all the characteristics of claim 1.

In the preferred embodiment, each of said transmission elements is a toothed belt.

Once again in the case of the preferred embodiment, the planetary structure is supported so that it can turn in an area corresponding to its outer circumferential surface via a single rolling bearing, including an outer ring carried by the structure for supporting the machine that also sustains the weight of the planetary structure.

Once again with reference to the preferred embodiment, the aforesaid planetary structure carries a coaxial pulley, which is engaged by one or more endless belts moved by the aforesaid first electric motor. Furthermore, the planetary structure is formed with a circumferential series of vertical cylindrical cavities, within which the shafts of the kneading implements are supported so that they can turn. Said shafts are provided at their top ends with respective pulleys, which are each governed, via a belt drive, by the second electric motor. Once again in the case of the preferred embodiment, the pulleys coaxial to the shafts of the kneading implements are governed in rotation, via respective endless belts, by two coaxial pulleys set axially on top of one another, which are carried by a vertical shaft, supported in rotation on the planetary structure and in turn carrying a further coaxial pulley that is governed, via a belt drive, by the second electric motor.

Thanks to the characteristics referred to above, the kneading machine according to the invention is superior to the known machines of the present category from the standpoint of the guarantee of not contaminating the processed foodstuff and at the same time has an extremely simple structure and ensures reliable operation.

The invention will now be described with reference to the annexed plate of drawings, which are provided purely by of way of non-limiting example, and in which:
Figure 1 is a schematic view, in cross section and in elevation, of a preferred embodiment of the machine according to the invention;
Figure 2 is a diagram in plan view of the machine of Figure 1;
Figure 3 is a view at an enlarged scale of a detail of Figure 1;
Figure 4 is a further enlarged view of a detail of Figure 3; and
Figure 5 is a view at an enlarged scale of a detail of Figure 4, according to a variant.

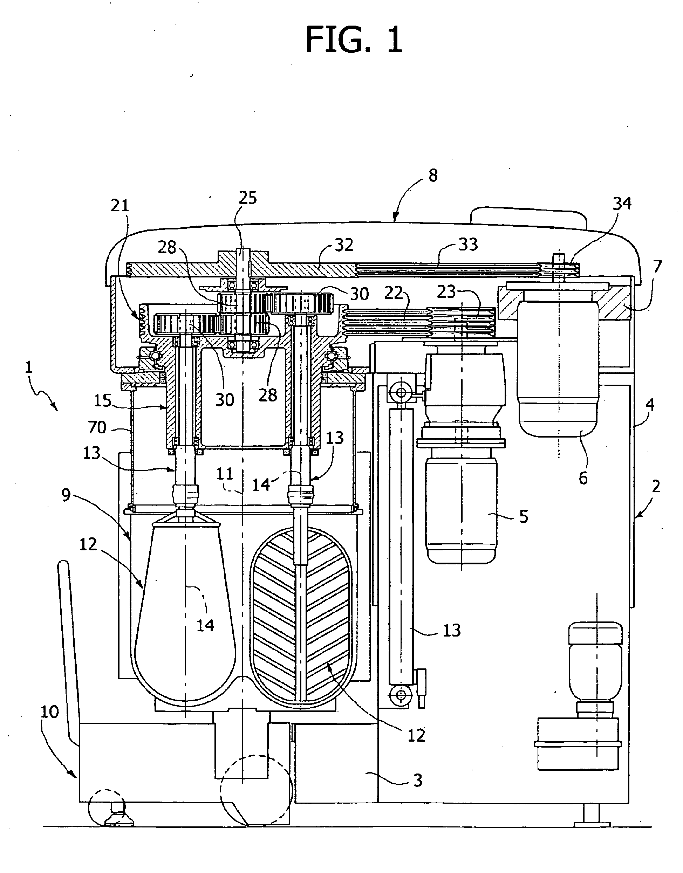

In Figure 1, the reference number 1 designates as a whole a planetary kneading machine for foodstuffs, comprising a fixed structure 2 including a base 3, from which there rises a column-like casing 4. A first electric motor 5 and a second electric motor 6 are supported by the structure 7 of a top head 8 of the machine that projects in cantilever fashion from the column-like structure 2 so as to surmount a kneading tank 9, which in the example illustrated is carried on a carriage 10 that can be coupled, in any known way, to the fixed structure 2. The tank 9 has a circular conformation in plan view, with a central vertical axis 11.

The top head 8 of the machine is mobile vertically, by means of a guide of a known type (not illustrated), with respect to the column-like structure 2 between a lowered operative position (illustrated in Figure 1) and a raised position.

As will be illustrated in greater detail in what follows, projecting from the head 8 downwards are two kneading implements 12, of any known type, which are received within the tank 9 in the lowered condition of the head 8. At the end of the kneading operation, the head 8 is raised with respect to the fixed structure 2 by activation of a fluid-operated cylinder 13, the ends of which are respectively connected to the fixed structure 2 and to the structure 7 of the head 8.

The two kneading implements 12 have respective vertical shafts 13 that are supported so that they can turn about respective axes 14 set at a distance from the central axis 11 of the tank and diametrally opposite to one another. Of course, the invention applies also to the case of planetary machines with any number of kneading implements. The shafts 13 of the kneading implements 12 are installed so that they can turn about the respective axes 14 on a planetary supporting structure 15, which is in turn mounted so that it can turn on the structure 7 of the head 8 of the machine about the vertical central axis 11.

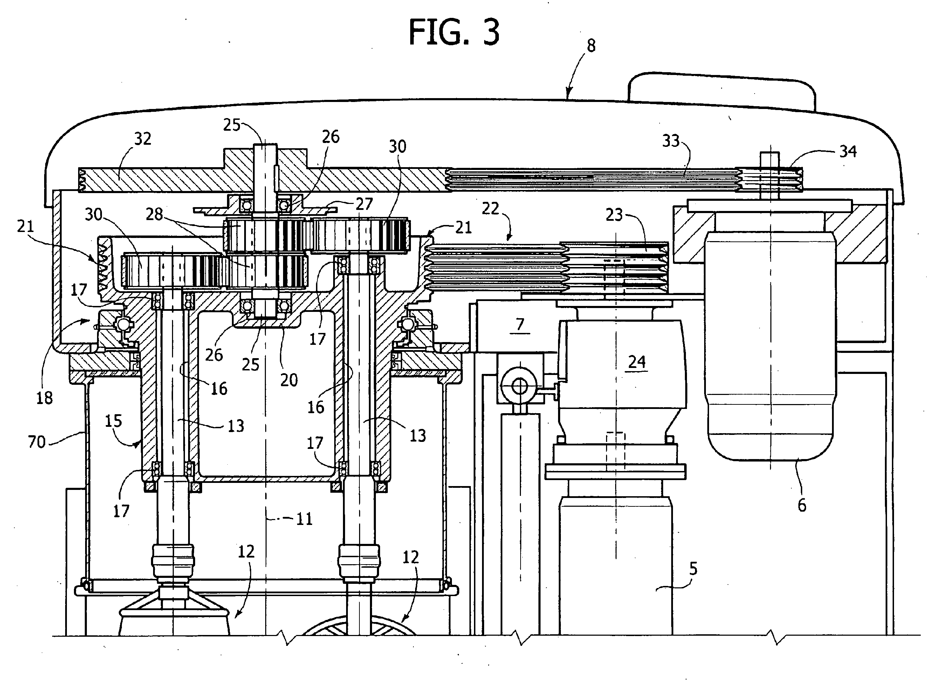

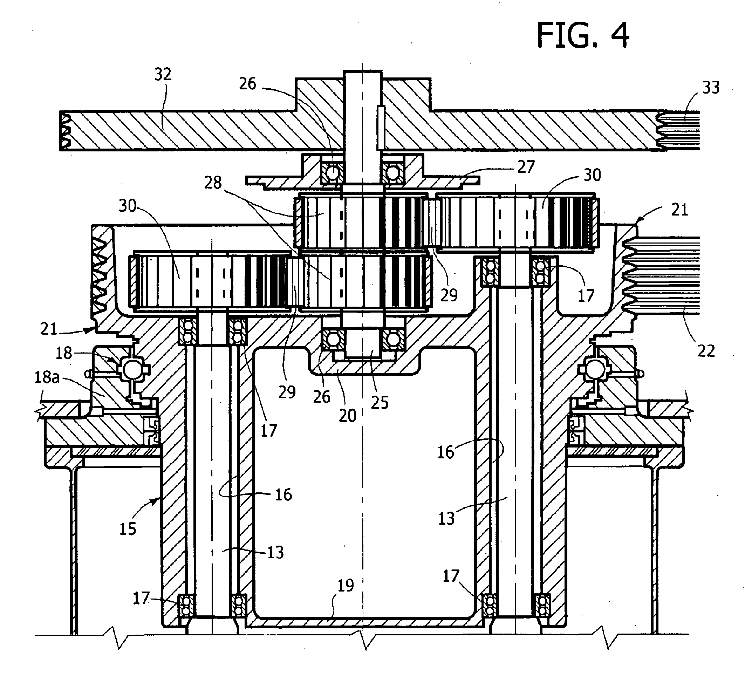

As may be seen in greater detail in Figures 3 and 4, the planetary supporting structure 15 has a generally cylindrical conformation with two vertical cylindrical cavities 16 within which the shafts 13 are mounted so that they can turn with interposition of rolling bearings 17.

The planetary supporting structure 15 is mounted so that it can turn on the structure 7 of the head 8 in an area corresponding to its outer circumferential surface, by means of a single rolling bearing 18.

Purely by way of example, the invention is illustrated with reference to the use of a bearing 18 in which the inner race for a plurality of balls is made directly on the outer circumferential surface of the structure 15. The outer ring 18a of the bearing 18 is fixed to the load-bearing structure 7 and sustains the weight of the structure 15 and of the kneading implements 12 carried thereby.

Once again with reference to the specific example illustrated, the two cylindrical cavities 16 made in the planetary structure 15 extend between a bottom wall 19 and a top wall 20 forming part of said structure.

Rising from the top wall 20 is a multigroove V-belt sheave 21, run over which is a number of endless drive belts 22, the cross section of which has a profile corresponding to that of the multigroove V-belt sheave 21 and each of which draws its motion from a pulley 23 (Figures 1 - 3) actuated by the electric motor 5 with the interposition of a motor reducer 24.

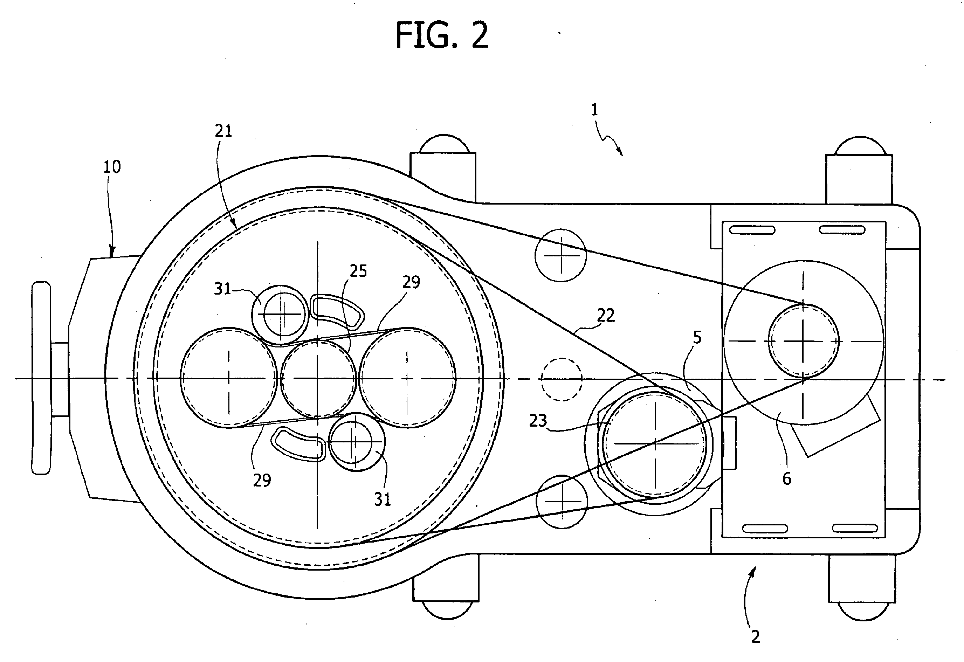

The planetary supporting structure 15 also supports a shaft 25 in such a way that it can turn about the central axis 11. The shaft 25 is mounted so that it can turn by means of bearings 26 at its bottom end above the wall 20 and at its top end above a wall 27 forming part of the planetary supporting structure 15. Fitted on the shaft 25 are two coaxial pulleys 28 set axially on top of one another, each of which is connected, by means of a toothed belt 29 (see Figures 2, 4), to a respective toothed pulley 30 fitted on the top end of the corresponding shaft 13 of a respective kneading implement 12. With reference to Figure 2, associated to each of the belts 29 is a belt-tensioning element 31. The shaft 25 carries, at its top end, a grooved pulley 32, which draws its motion from the electric motor 6 by means of V belts that engage the pulley 32, and a pulley 34 mounted on the output shaft of the motor 6.

In operation, the tank 9 is prepared with the ingredients necessary for the dough and, in the case of the example illustrated, set in the operative position by engaging the carriage 10 to the fixed structure of the machine. Said operation is performed with the top head 8 in the raised condition. Then, the head is lowered so as to bring the kneading implements 12 down within the tank, and then the two motors 5, 6 are activated. The rotation of the motor 5 causes, as a result of the transmission consisting of the motor reducer 24, the belt 22, and the pulleys 23 and 21, rotation of the planetary structure 15. The kneading implements 12 thus perform with their axes an orbital movement about the central axis 11 of the tank. At the same time, the motor 6 causes, via the transmission comprising the belt 33 and the pulleys 34 and 32, rotation of the shaft 25 and consequently rotation of the two pulleys 28. The latter transmit their rotation to the two kneading implements by means of the belts 29, so that said implements turn about their axes whilst they perform their orbital movement about the central axis 11 of the tank.

All the means of transmission provided in the machine are lubricant-free so that the problem of a risk of contamination of the foodstuff that exists, instead, in machines equipped with gear transmissions is solved at the root. Furthermore, the structure of the machine is relatively simple and reliable, thanks in particular to the fact that the planetary structure 15 is supported in rotation about the central axis 11 in an area corresponding to its outer circumferential surface. Particularly advantageous then is the provision of a single rolling bearing 18 for the purpose of supporting the planetary structure 15 so that it can turn.

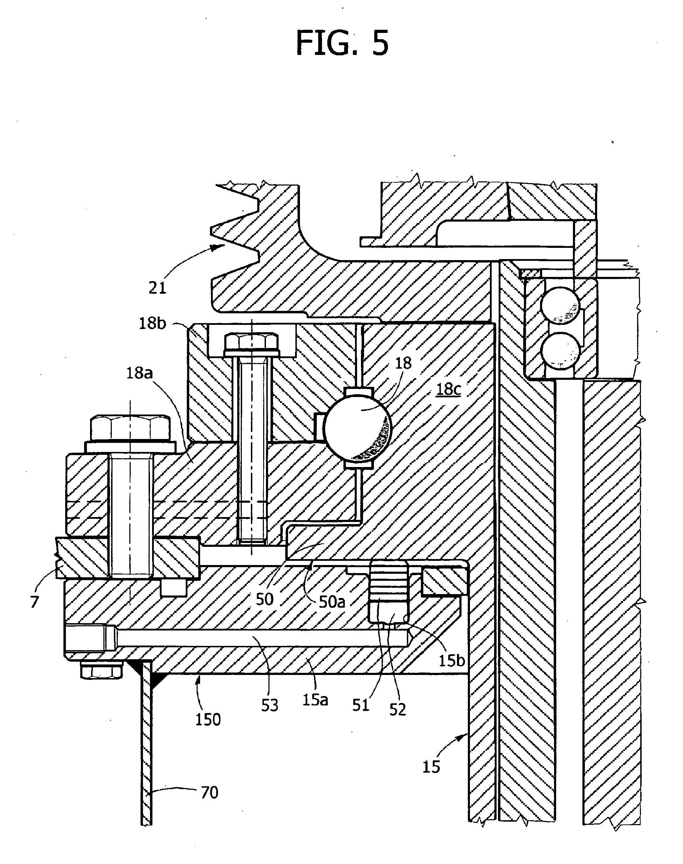

Figure 5 shows a detail of a preferred embodiment of the ball bearing 18, which comprises a series of balls that engage an inner ring 18c rotating with the planetary structure 15, and two outer rings 18a and 18b set on top of one another, screwed to the non-rotating structure of the head.

Hanging from the bottom of the structure 7 is a cylindrical casing 70, which is to engage within the tank 9 (see also Figures 1, 3) for isolating the kneading environment from the external environment, in order to keep it above or below atmospheric pressure, according to the specific needs of the dough. In this case it is necessary to ensure pressure tightness within the kneading environment notwithstanding the fact that the planetary structure 15 is mounted so that it can turn with respect to the structure of the head 7. For this purpose, made in an annular plate 15a fixed rigidly to the structure of the head 7 is an annular cavity 15b (see Figure 5), concentric with the axis 11 of rotation of the planetary structure, housed within which is an annular sealing gasket 51, which is also concentric with the axis 11.

The gasket 51 has a front surface, orthogonal to the axis 11, co-operating in sliding contact with a surface 50a of the rotating structure 15.

The chamber 52 defined between the bottom of the cavity 15b and the gasket 51 is in communication via channels 53 made in the plate 15a with an independent source of pressurized air (not illustrated), so that the gasket 51 is constantly pushed against the surface 50a. The rotation of the surface 50a with respect to the gasket 51 leads to the gasket progressively wearing out by friction. Consequently, the axial dimension of the gasket is progressively reduced, whilst the pressure in the chamber 52 always keeps the gasket itself in contact with the wall 50a.

Of course, without prejudice to the principle of the invention, the details of construction and the embodiments may vary widely with respect to what is described and illustrated herein purely by way of example, without thereby departing from the scope of the present invention.

In particular, it should be noted that the constructional details of the machine illustrated herein are given purely by way of example. Thus, for instance, the general structure of the machine could even be completely different from the one illustrated herein as regards the tank and the structure for supporting the implements, which could also not be in the form of a raisable head. It is also possible to envisage, for example, the case of a tank not mounted on a removable carriage, but connected rigidly to the structure of the machine, and for example provided with an opening on its bottom wall for discharge of the product processed. Or else again it is possible to envisage a fixed head and a tank that can be lowered for disengaging the kneading implements of the tank.

## Claims

1. A planetary kneading machine for foodstuffs, comprising:
a tank (9);
one or more kneading implements (12), which can turn about respective vertical axes (14) that are set at a distance from a central vertical axis (11);
a planetary structure (15) for supporting the kneading implements (12), on which each kneading implement (12) is mounted so that it can turn about its own axis (14), said planetary supporting structure (15) being in turn mounted so that it can turn about the central axis (11) of the tank (9) on a supporting structure (7) of the machine (1);
first means for governing a rotation of the planetary structure (15) about the central axis (11) of the tank (9); and
second means for governing a rotation of each kneading implement (12) about its own axis (14),
wherein said first governing means and said second governing means comprise a first electric motor (5) and a second electric motor (6), and a first transmission (21-23) that connects the first electric motor (5) to the aforesaid planetary structure (15), and a second transmission (34, 33, 32, 25, 28, 29, 30) that connects the second electric motor (6) to each of said kneading implements which can turn (12), and wherein each of said first and second transmissions are of a lubricant-free type, and preferably of a type comprising one or more endless transmission elements (22, 33, 29),
**characterized in that** said endless transmission element is a belt, and **in that** the planetary structure (15) has a body rotatably supporting the implements (12) around their axes (14), said body having an outer circumferential surface and being rotatably supported by said support structure (7) of the machine around said central axis (11) by means of a rolling bearing (18) located at said outer circumferential surface, radially on the outside with respect to the axes (14) of the implements (12)

2. The kneading machine according to Claim 1, **characterized in that** said endless transmission element is a toothed belt.

3. The kneading machine according to Claim 1, **characterized in that** it comprises a single rolling bearing (18) for supporting the planetary structure (15), having an outer ring carried by the load-bearing structure (7) and designed to sustain the weight of the planetary structure (15).

4. The kneading machine according to Claim 3, **characterized in that** said single rolling bearing has the inner race for engaging the rolling elements made directly in the outer circumferential surface of the planetary structure (15).

5. The kneading machine according to Claim 1, **characterized in that** said planetary structure (15) carries a pulley (21) for engaging an endless drive belt (22) that draws its motion from a pulley (23) actuated by the first electric motor (5).

6. The kneading machine according to Claim 1, **characterized in that** said planetary structure (15) has a circumferential series of cylindrical cavities (16) within which vertical rotatable shafts are mounted (13), each of which carries a respective kneading implement (12).

7. The kneading machine according to Claim 6, **characterized in that** each of said shafts carries a pulley (30) connected by means of a belt drive to the second electric motor (6).

8. The kneading machine according to Claim 7, **characterized in that** the pulleys carried by the shafts (13) of the kneading implements (12) are connected by means of respective belt drives (29) to two coaxial pulleys (28) fitted axially on top of one another on a shaft (25) that is supported so that it can be turned by the planetary structure (15) about the aforesaid central axis (11), said shaft (25) carrying a further pulley (32) that is actuated by means of a belt drive (32, 33, 34) by the second electric motor (6).

9. The kneading machine according to Claim 1, **characterized in that** said planetary structure (15) is provided with a seal gasket (51) carried by the fixed structure (7) of the machine for isolating the kneading environment from the external environment so as to enable the kneading environment to be kept at a pressure different from atmospheric pressure.

10. The kneading machine according to Claim 9, **characterized in that** said seal gasket (51) is an annular element, which is set concentrically with respect to the axis (11) of rotation of the planetary structure and has a front sealing surface, orthogonal to said axis (11) and co-operating with a surface facing it (50a), which is fixed to the planetary structure (15).

11. The kneading machine according to Claim 9, **characterized in that** said seal gasket (51) is mounted so that it can slide axially in an annular cavity (15b) of an element (15a) rigidly connected to the structure of the head (7), and is subjected to a pressure applied by an independent pressure source, tending to press it against the co-operating surface (50a) of the planetary structure (15).

12. The kneading machine according to Claim 11, **characterized in that** said seal gasket (51) is made of synthetic material, preferably PTFE.

## Patentansprüche

1. Planetenknetmaschine für Lebensmittel, umfassend:
einen Behälter (9);
ein oder mehrere Knetwerkzeuge (12), die sich um jeweils vertikale Achsen (14) drehen können, welche in einem Abstand von einer vertikalen Mittelachse (11) angeordnet sind;
eine Planetenkonstruktion (15) zum Stützen der Knetwerkzeuge (12), auf der jedes Knetwerkzeug (12) so angebracht ist, dass es sich um seine eigene Achse (14) drehen kann, wobei die Planeten-Stützkonstruktion (15) wiederum so angebracht ist, dass sie sich um die Mittelachse (11) des Behälters (9) auf einer Stützkonstruktion (7) der Maschine (1) drehen kann;
erste Mittel zum Steuern einer Rotation der Planetenkonstruktion (15) um die Mittelachse (11) des Behälters (9); und
zweite Mittel zum Steuern einer Rotation jedes Knetwerkzeugs (12) um seine eigene Achse (14),
wobei die ersten Steuermittel und die zweiten Steuermittel einen ersten Elektromotor (5) und einen zweiten Elektromotor (6) umfassen und eine erste Transmission (21-23), die den ersten Elektromotor (5) mit der vorgenannten Planetenkonstruktion (15) verbindet, und eine zweite Transmission (34, 33, 32, 25, 28, 29, 30), die den zweiten Elektromotor (6) mit jedem Knetwerkzeug, das sich drehen kann (12), verbindet, und wobei jeder der ersten und der zweiten Transmissionen schmiermittelfrei ist und vorzugsweise von einer Art ist, die ein oder mehrere endlose Übertragungselemente (22, 33, 29) aufweist,
**dadurch gekennzeichnet, dass** das endlose Übertragungselement ein Riemen ist, und dass die Planetenkonstruktion (15) einen Körper aufweist, der drehbar die Werkzeuge (12) um ihre Achsen (14) stützt, wobei der Körper eine umlaufende Außenfläche aufweist und drehbar um die Mittelachse (11) von der Stützkonstruktion (7) der Maschine durch ein Wälzlager (18), welches sich auf der umlaufenden Außenfläche befindet, radial auf der Außenseite in Bezug auf die Achsen (14) der Werkzeuge (12), gestützt ist.

2. Knetmaschine nach Anspruch 1, **dadurch gekennzeichnet**, das das endlose Übertragungselement ein Zahnriemen ist.

3. Knetmaschine nach Anspruch 1, **dadurch gekennzeichnet, dass** sie ein einzelnes Wälzlager (18) zum Stützen der Planetenkonstruktion (15) umfasst, das einen äußeren Ring aufweist, der von der tragenden Konstruktion (7) getragen wird und dafür ausgelegt ist, das Gewicht der Planetenkonstruktion (15) zu halten.

4. Knetmaschine nach Anspruch 3, **dadurch gekennzeichnet, dass** das einzelne Wälzlager den Innenring zum Eingreifen der Wälzkörper direkt in der umlaufenden Außenfläche der Planetenkonstruktion (15) ausbildet.

5. Knetmaschine nach Anspruch 1, **dadurch gekennzeichnet, dass** die Planetenkonstruktion (15) eine Riemenscheibe (21) zum Eingreifen in einen endlosen Antriebsriemen (22), der seine Bewegung von einer Riemenscheibe (23) bezieht, die von dem ersten Elektromotor (5) bewegt ist.

6. Knetmaschine nach Anspruch 1, **dadurch gekennzeichnet, dass** die Planetenkonstruktion (15) umfangsseitig eine Reihe zylindrischer Hohlräume (16) aufweist, innerhalb derer vertikale, drehbare Schäfte angebracht sind (13), von denen jeder jeweils ein Knetwerkzeug (12) trägt.

7. Knetmaschine nach Anspruch 6, **dadurch gekennzeichnet, dass** jeder der Schäfte eine Riemenscheibe (30) trägt, die über einen Riemenantrieb mit dem zweiten Elektromotor (6) verbunden ist.

8. Knetmaschine nach Anspruch 7, **dadurch gekennzeichnet, dass** die Riemenscheiben, die von den Schäften (13) der Knetwerkzeuge (12) getragen werden, über jeweilige Riemenantriebe (29) mit zwei koaxialen Riemenscheiben (28) verbunden sind, die axial übereinander auf einem Schaft (25) montiert sind, der so gestützt ist, dass er durch die Planetenkonstruktion (15) um die vorgenannte Mittelachse (11) gedreht werden kann, wobei der Schaft (25) eine weitere Riemenscheibe (32) trägt, die über einen Riemenantrieb (32, 33, 34) von dem zweiten Elektromotor (6) bewegt wird.

9. Knetmaschine nach Anspruch 1, **dadurch gekennzeichnet, dass** die Planetenkonstruktion (15) mit einer Dichtung (51) versehen ist, die von der feststehenden Konstruktion (7) der Maschine getragen wird, um die Knetumgebung von der äußeren Umgebung zu isolieren, damit die Knetumgebung bei einem Druck gehalten werden kann, der sich von dem atmosphärischen Druck unterscheidet.

10. Knetmaschine nach Anspruch 9, **dadurch gekennzeichnet, dass** die Dichtung (51) ein ringförmiges Element ist, das konzentrisch in Bezug auf die Rotationsachse (11) der Planetenkonstruktion eingesetzt ist und senkrecht zu der Achse (11) eine vordere Dichtfläche aufweist, die mit einer ihr gegenüberliegenden Fläche (50a) zusammenwirkt, die an der Planetenkonstruktion (15) feststehend ist.

11. Knetmaschine nach Anspruch 9, **dadurch gekennzeichnet, dass** die Dichtung (51) derart angebracht ist, dass sie axial in einer ringförmigen Ausnehmung (15b) eines Elements (15a), das fest mit der Struktur des Kopfendes (7) verbunden ist, gleiten kann, und dass sie einem Druck ausgesetzt ist, der von einer unabhängigen Druckquelle ausgeübt wird, die versucht, sie gegen die zusammenwirkende Fläche (50a) der Planetenkonstruktion (15) zu drücken.

12. Knetmaschine nach Anspruch 11, **dadurch gekennzeichnet, dass** die Dichtung (51) aus Kunststoff, vorzugsweise PTFE, hergestellt ist.

## Revendications

1. Machine de malaxage planétaire pour aliments, comprenant:
- un réservoir (9) ;
- un ou plusieurs outils de malaxage (12) qui peuvent tourner autour d'axes verticaux respectifs (14) situés à une certaine distance d'un axe vertical central (11) ;
- une structure planétaire (15) pour supporter les outils de malaxage (12), sur laquelle chaque outil de malaxage (12) est monté de manière à pouvoir tourner autour de son propre axe (14), ladite structure de support planétaire (15) est à son tour montée de sorte qu'elle peut tourner autour de l'axe central (11) du réservoir (9) sur une structure de support (7) de la machine (1) ;
- un premier moyen pour commander la rotation de la structure planétaire (15) autour de l'axe central (11) du réservoir (9) ; et
- un second moyen pour commander la rotation de chaque instrument de malaxage (12) autour de son propre axe (14) ;
dans laquelle ledit premier moyen de commande et ledit second moyen de commande comprennent un premier moteur électrique (5) et un second moteur électrique (6), et une première transmission (21-23) qui relie le premier moteur électrique (5) à la structure planétaire (15) susmentionnée ainsi qu'une seconde transmission (34, 33, 32, 25, 28, 29, 30) qui relie le second moteur électrique (6) à chacun desdits instruments de malaxage (12) pouvant tourner ;
et dans laquelle chacune desdites première et seconde transmissions sont du type sans lubrifiant, et de préférence du type comprenant un ou plusieurs éléments de transmission sans fin (22, 33, 39) ;
**caractérisée en ce que** ledit élément de transmission sans fin est une courroie et **en ce que** ladite structure planétaire (15) comprend un corps supportant en rotation les instruments (12) autour de leur axe (14), lequel corps comprend une surface circonférentielle externe et est supporté en rotation par ladite structure de support (7) de la machine autour dudit axe central (11) par le biais d'un roulement (18) situé au niveau de ladite circonférence externe, radialement sur l'extérieur par rapport aux axes (14) des instruments (12).

2. Machine de malaxage selon la revendication 1, **caractérisée en ce que** l'élément de transmission sans fin est une courroie crantée.

3. Machine de malaxage selon la revendication 1, **caractérisée en ce qu'**elle comprend un seul roulement (18) pour supporter la structure planétaire (15), comportant un anneau externe supporté par la structure de support de charge (7) et conçu pour supporter le poids de la structure planétaire (15).

4. Machine de malaxage selon la revendication 3, **caractérisée en ce que** ledit roulement unique possède la piste interne entrant en contact avec les éléments de roulement formée directement dans la surface circonférentielle externe de la structure planétaire (15).

5. Machine de malaxage selon la revendication 1, **caractérisée en ce que** ladite structure planétaire (15) supporte une poulie (21) entrant en contact avec une courroie d'entraînement sans fin (22) qui est mise en mouvement par une poulie (23) actionnée par le premier moteur électrique (5).

6. Machine de malaxage selon la revendication 1, **caractérisée en ce que** ladite structure planétaire (15) comporte une série circonférentielle de cavités cylindriques (16) dans lesquelles sont montés des arbres rotatifs verticaux (13) supportant chacun un instrument de malaxage (12) respectif.

7. Machine de malaxage selon la revendication 6, **caractérisée en ce que** chacun desdits arbres supporte une poulie (30) reliée par une courroie d'entraînement au second moteur électrique (6).

8. Machine de malaxage selon la revendication 7, **caractérisée en ce que** les poulies supportées par les arbres (13) des instruments de malaxage (12) sont reliées par des courroies d'entraînement respectives (29) à deux poulies coaxiales (28) disposées axialement l'une sur l'autre sur un arbre (25) qui est supporté de sorte qu'il puisse être entraîné en rotation par la structure planétaire (15) autour de l'axe central (11) susmentionné, ledit arbre (25) supportant une autre poulie (32) qui est actionnée par le second moteur électrique (6) par le biais d'une courroie d'entraînement (32, 33, 34).

9. Machine de malaxage selon la revendication 1, **caractérisée en ce que** ladite structure planétaire (15) comporte un joint étanche (51) supporté par la structure fixe (7) de la machine afin d'isoler le milieu de malaxage du milieu externe de sorte que le milieu de malaxage puisse être maintenu à une pression différente de la pression atmosphérique.

10. Machine de malaxage selon la revendication 9, **caractérisée en ce que** ledit joint d'étanchéité (51) est un élément annulaire qui est placé concentriquement par rapport à l'axe de rotation (11) de la structure planétaire (15), et possède une surface d'étanchéité avant orthogonale au dit axe (11) et coopérant avec une surface lui faisant face (50a) qui est fixée à la structure planétaire (15).

11. Machine de malaxage selon la revendication 9, **caractérisée en ce que** ledit joint d'étanchéité (51) est monté de sorte qu'il puisse coulisser axialement dans une cavité annulaire (15b) d'un élément (15a) reliée rigidement à la structure de la tête (7), et est soumis à une pression exercée par une sou rce de pression indépendante tendant à le presser contre la surface de coopération (50a) de la structure planétaire (15).

12. Machine de malaxage selon la revendication 11, **caractérisée en ce que** ledit joint d'étanchéité (51) est fait d'un matériau synthétique, de préférence du PTFE.
